# EUROPÄISCHE PATENTSCHRIFT

(11) **EP 3 387 284 B1**
(45) Veröffentlichungstag und Bekanntmachung des Hinweises auf die Patenterteilung: **08.04.2020**
(21) Anmeldenummer: 16808666.8
(22) Anmeldetag: 08.12.2016
(51) Int. Cl.: F16D 65/097, F16D 66/02

(54) **BREMSBELAG FÜR EINE SCHEIBENBREMSE**
BRAKE PAD FOR A DISC BRAKE
GARNITURE DE FREIN POUR FREIN À DISQUE

(30) Priorität: 09.12.2015 DE 102015121390; 18.01.2016 DE 102016100693
(43) Veröffentlichungstag der Anmeldung: 17.10.2018
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(86) Internationale Anmeldenummer: PCT/EP2016/080297
(87) Internationale Veröffentlichungsnummer: WO 2017/097921

(56) Entgegenhaltungen:
- WO-A1-2009/103499
- WO-A1-2011/076424
- WO-A2-03/038298
- DE-A1-102013 216 592

## Beschreibung

Die Erfindung betrifft einen Bremsbelag für eine Scheibenbremse, insbesondere für ein Nutzfahrzeug, nach dem Oberbegriff des Anspruchs 1.

Zur Erkennung einer zulässigen Verschleißgrenze des Reibbelages ist der Einsatz eines elektrischen Verschleißsensors bekannt, der ein Gehäuse aus einem hochtemperaturfesten, nicht elektrisch leitenden Material aufweist, in dem ein Kontaktleiter in Form einer Leiterschlaufe angeordnet ist.

Dieser Verschleißsensor ist in der Belagträgerplatte des Bremsbelages gehalten, in Nachbarschaft zu einer an der Belagträgerplatte befestigten Haube, mit der eine am Rand der Belagträgerplatte angeordnete Belaghaltefeder unlösbar am Bremsbelag gehalten ist.

Dabei ist der Verschleißsensor in einen Schlitz der Belagträgerplatte eingesteckt, während der Reibbelag im Austrittsbereich des Verschleißsensors aus der Belagträgerplatte ausgespart ist.

Ein gattungsgemäßer Bremsbelag ist beispielsweise in der DE 10 2007 049 981 A1 offenbart. Dieser Bremsbelag ist in montierter Stellung in einem Belagschacht eines Bremsträgers in radialer Richtung federnd gelagert, so dass er entgegen der durch die Belaghaltefeder aufgebrachte Federkraft im Fahrbetrieb relativ zum Bremsträger radial bewegt wird.

Betriebsbedingt kommt es häufig zu einer ungleichmäßigen, d.h. nicht planen Abnutzung der Reibflächen einer fahrzeugseitigen Bremsscheibe, mit der Folge einer Riefenbildung. Bei einem Lösen der Bremse kann es durch Vibrationen zu einer radialen Bewegung des Bremsbelages kommen mit einer kurzzeitigen Überschreitung der Riefen, wodurch das sehr spröde Gehäusematerial des Verschleißsensors beschädigt werden kann.

Darüber hinaus wird durch die besagte Aussparung im Reibbelag zur Platzierung des Verschleißsensors das Verschleißvolumen entsprechend reduziert, was naturgemäß die Standzeit des Bremsbelages beeinträchtigt.

Überdies gestaltet sich die Montage des Verschleißsensors bei einem Bremsbelag nach dem Stand der Technik insofern umständlich, als nach der Befestigung der Belaghaltefeder an der Belagträgerplatte der Verschleißsensor zwischen der Belaghaltefeder und der Belagträgerplatte hindurchgeführt werden muss, was einer optimierten rationellen Fertigung entgegensteht.

Der Erfindung liegt die Aufgabe zugrunde, einen Bremsbelag der gattungsgemäßen Art so weiterzuentwickeln, dass mit konstruktiv geringem Aufwand die Fertigung des Bremsbelages vereinfacht und damit kostengünstiger wird und dass seine Standzeit erhöht wird.

Diese Aufgabe wird durch einen Bremsbelag mit den Merkmalen des Anspruchs 1 gelöst. Geschaffen wird damit ein Bremsbelag für eine Scheibenbremse, insbesondere für eine Scheibenbremse für ein Nutzfahrzeug, mit einer einen Reibbelag tragenden Belagträgerplatte, mit der ein Element verbunden ist, das relativ zu der Belagträgerplatte beweglich ist, und mit einem elektrischen Verschleißsensor, wobei der Verschleißsensor an dem relativ zur Belagträgerplatte beweglichen Element so angeordnet ist, dass er selbst relativ zur Belagträgerplatte relativ beweglich ist. Die Hauptebene der Belagträgerplatte erstreckt sich senkrecht zu einer Zuspannrichtung des Belags in einem in eine Bremse eingebauten Zustand. Parallel zu dieser Hauptebene kann der Verschleißsensor beweglich sein.

Durch diese konstruktive Ausgestaltung ergeben sich eine ganze Reihe von Vorteilen, die insoweit besonders bemerkenswert sind, als die Erfindung im Wesentlichen kostenneutral realisierbar ist.

Zunächst ist anzumerken, dass der Verschleißsensor praktisch von der Belagträgerplatte bzw. dem Reibbelag entkoppelt ist. D.h., er bewegt sich bei fahrtbedingten Vibrationen nicht mehr entsprechend radial in der Bremse, so dass er stets denselben Bereich der Bremsscheibe kontaktiert. Die zuvor beschriebenen Probleme, die sich aus der Riefenbildung der Bremsscheibe ergeben, können nun nicht mehr auftreten, so dass das Gehäuse des Verschleißsensors der Gefahr einer Beschädigung nicht mehr ausgesetzt ist.

Dabei ist es bevorzugt, dass der Verschleißsensor an einer Belaghaltefeder angeordnet ist, welche das bewegliche Element bildet.

Bei dieser Ausgestaltung ist es ferner vorteilhaft, wenn der Verschleißsensor in einer Hubrichtung der Belaghaltefeder gesehen relativ bewegbar zur Belagträgerplatte an dieser gehalten ist. Die Hubrichtung liegt parallel zur Ebene, in welcher sich die Belagträgerplatte erstreckt.

Der Verschleißsensor kann derart an der Belaghaltefeder befestigt sein, wozu verschiedene konstruktive Lösungen denkbar sind. Hierzu zählt beispielsweise die Ausbildung einer vorzugsweise um 90° zu einer zugehörigen Bremsscheibe hin abgewinkelten Lasche, an der dann der Verschleißsensor gehalten ist.

Diese abgewinkelte Lasche, an welcher der Verschleißsensor befestigt ist, kann auch das Halteelement bilden.

Denkbar ist auch, den Verschleißsensor an einem Halteelement zu befestigen, mit der die Belaghaltefeder an der Belagträgerplatte gehalten ist.

Insbesondere, wenn das Halteelement in Umfangsrichtung der Bremsscheibe mittig an der Belagträgerplatte befestigt ist, ist auch der Verschleißsensor in dieser Position gehalten, womit ein Schrägverschleiß des Reibbelages, wenn überhaupt, so nur einen geringen Einfluss auf das Ansprechverhalten des Verschleißsensors ausübt.

Neben diesen rein funktionalen Verbesserungen führt die Erfindung auch zu einer deutlich vereinfachten Montage des Verschleißsensors, da dieser nun nicht mehr nach einem Befestigen der Belaghaltefeder in die Belagträgerplatte eingefügt werden muss, unter Einfädelung zwischen der Belaghaltefeder und der Belagträgerplatte.

Im Übrigen kann durch die Positionierung des Verschleißsensors außerhalb des Reibbelages auf die erwähnte Aussparung verzichtet werden, so dass das Verschleißvolumen des Reibbelages vollständig zur Verfügung steht, woraus sich eine Erhöhung der Standzeit ergibt, mit den entsprechenden Kostenvorteilen.

Der Verschleißsensor kann stoffschlüssig, beispielsweise durch Schweißen oder Löten, bevorzugt jedoch formschlüssig mit der Belaghaltefeder oder mit dem Halteelement verbunden sein, wozu miteinander korrespondierende Rastmittel vorgesehen sind, die, wie ein weiterer Gedanke der Erfindung vorsieht, aus Rastschenkeln des Gehäuses des Verschleißsensors sowie aus Hinterschneidungen des Halteelementes oder der abgewinkelten Lasche der Belaghaltefeder bestehen können, die von den Rastschenkeln hintergriffen sind.

Durch diesen Formschluss wird insofern eine äußerst einfache Montage des Verschleißsensors möglich, als dieser lediglich in eine Öffnung beispielsweise des Halteelementes eingesteckt werden muss, unter Zusammendrücken der elastischen Rastschenkel, die sich in einer Endposition aufgrund der innewohnenden Rückstellkräfte derart spreizen, dass sie die Hinterschneidungen hintergreifen.

Zum Schutz des Verschleißsensors weist das Halteelement zwei, parallel und abständig zueinander angeordnete, radial ausgerichtete Laschen auf, die den radialen Weg bei federnder Auslenkung der Belaghaltefeder gegenüber der Belagträgerplatte begrenzen, so dass der Verschleißsensor nicht mit der Belagträgerplatte in Kontakt tritt.

Das Halteelement kann in einer Ausführung auch in Gestalt einer Haube ausgebildet sein.

Es ist zweckmäßig, wenn der Verschleißsensor als Endverschleißsensor ausgebildet ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Bremsbelag nach dem Stand der Technik in einer Vorderansicht;
- Figur 2: einen Bremsbelag gemäß der Erfindung, gleichfalls in einer Vorderansicht;
- Figur 3: einen Querschnitt durch einen Teilbereich des Bremsbelages gemäß der Linie III-III in Figur 2;
- Figur 4: einen Teil des Bremsbelages in einer geschnittenen Draufsicht;
- Figur 5: einen Schnitt durch den Bremsbelag gemäß der Linie V-V in Figur 4;
- Figuren 6 und 7: eine Einzelheit des Bremsbelages jeweils in verschiedenen Ansichten;
- Figur 8: eine weitere Einzelheit des Bremsbelages perspektivisch dargestellt,
- Figur 9: eine alternative Ausführungsvariante eines Bremsbelags gemäß der Erfindung, gleichfalls in einer Vorderansicht;
- Figur 10: einen Einzelheit des in Figur 9 gezeigten Bremsbelages, gleichfalls in einer Vorderansicht.

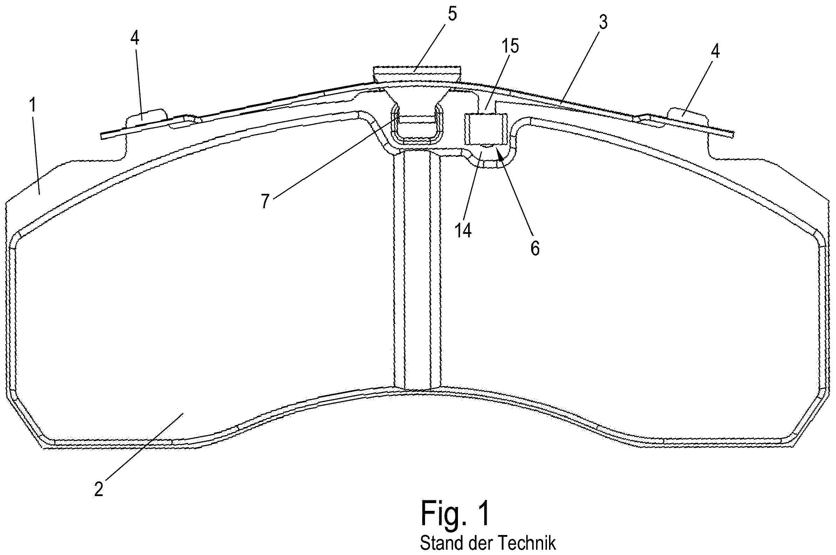

In der **Figur 1** ist ein Bremsbelag nach dem Stand der Technik abgebildet, mit einer Belagträgerplatte 1 und einem darauf befestigten Reibbelag 2.

An einer Randkante der Belagträgerplatte 1 sind Nasen 4 angeformt, die Schlitze einer Belaghaltefeder 3 durchtreten, die als Blattfeder ausgebildet ist und die mittels eines Halteelementes 5, welches hier als eine so genannte Haube ausgebildet ist, an der Belagträgerplatte 1 gehalten ist, wobei die Belaghaltefeder 3 mittels des Halteelementes 5 radial beweglich befestigt ist.

Seitlich neben dem Halteelement 5 ist ein Verschleißsensor 6 angeordnet, der in einen zur Belaghaltefeder 3 hin offenen Schlitz 15 der Belagträgerplatte 1 eingeführt ist und in einer Ausnehmung des Reibbelages 2 positioniert ist.

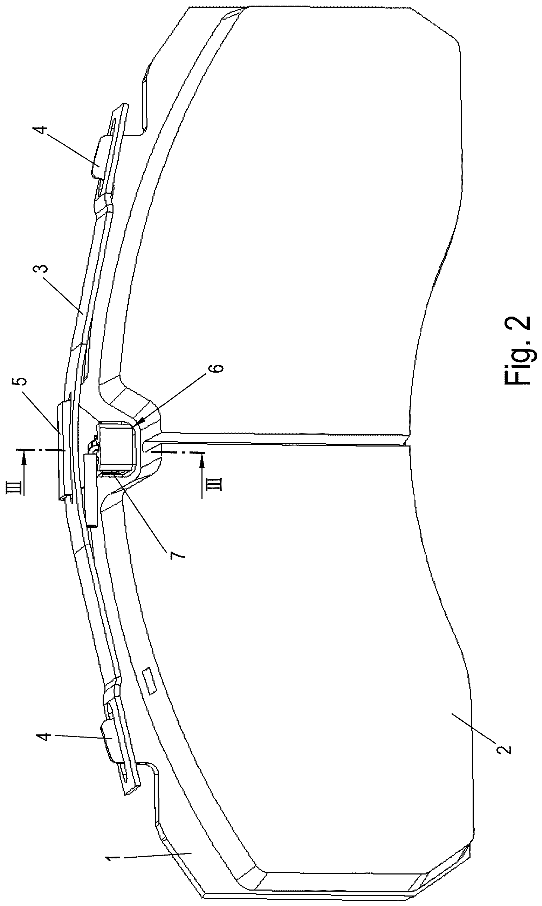

Die **Figur 2** zeigt einen Bremsbelag gemäß der Erfindung, der mit Ausnahme der Anordnung des Verschleißsensors 6 dem Bremsbelag nach Figur 1 entspricht.

Gemäß der Erfindung ist der Verschleißsensor 6 in dem Halteelement 5 befestigt, wobei diese, bezogen auf die Längserstreckung der Belagträgerplatte 1 in der Mitte angeordnet ist.

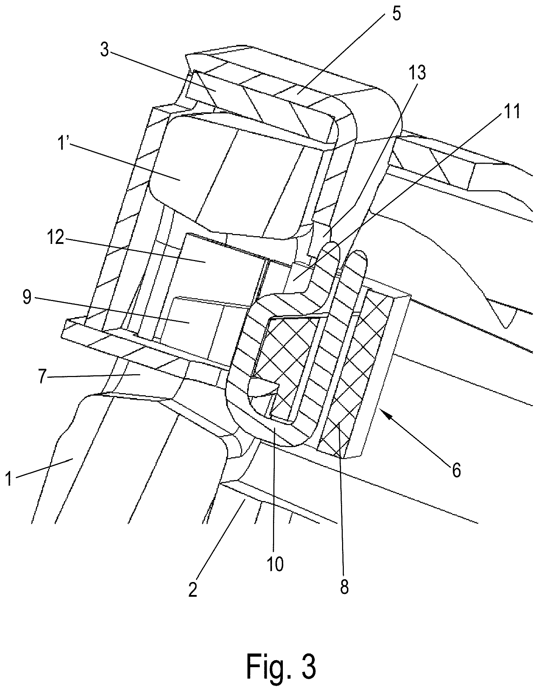

In der **Figur 3** ist in einer geschnittenen Seitenansicht der Verschleißsensor 6 in montierter Stellung zu sehen und erkennbar, dass er ein Gehäuse 8 aufweist, in dem ein elektrisch leitender Kontaktleiter 10 in Form eines Kabels in Richtung des Reibbelages 2 geführt ist, nach dessen bremsbedingtem Abschleifen der Kontaktleiter 10 freigelegt wird, was einerseits zu einem elektrisch leitenden Kontakt mit einer Bremsscheibe und anderseits zu einer Durchtrennung des elektrisch leitenden Kontaktleiters 10 führt. Der Kontakt mit der Bremsscheibe, die üblicherweise auf Massepotential des zugehörigen Fahrzeugs liegt, wie auch die Durchtrennung, welche einen Stromfluss durch den Kontaktleiter 10 unterbricht, werden durch eine geeignete, insbesondere einfache, elektrische/elektronische Schaltung erfasst und durch den mittels einer geeigneten Anzeige als das Erreichen einer vorgegebenen Verschleißgrenze signalisiert.

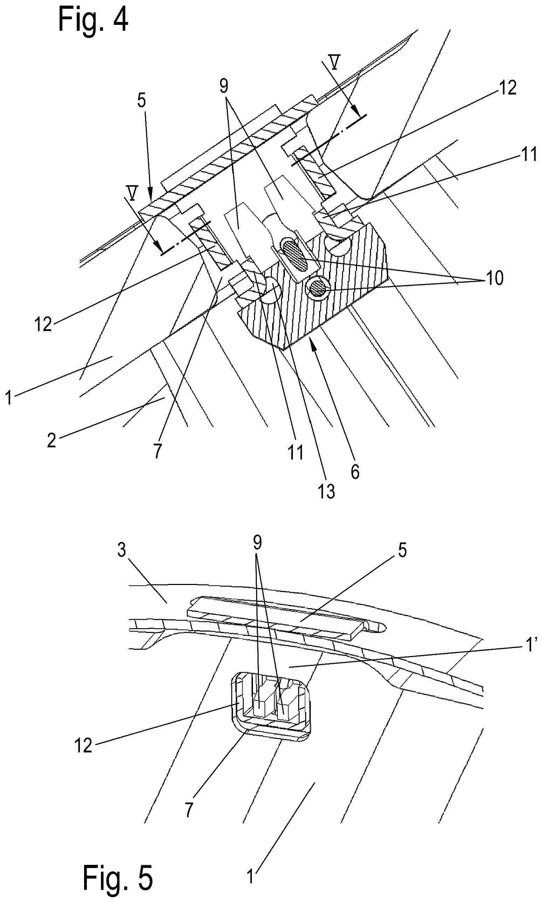

Wie insbesondere in der **Figur 4** deutlich zu erkennen ist, weist der Verschleißsensor 6 an das Gehäuse 8 angeformte, elastisch verformbare Rastschenkel 9 auf, die in montierter Stellung des Verschleißsensors 6 Halter 11 des Halteelementes 5 hintergreifen, so dass der Verschleißsensor 6 gegen Herausfallen gesichert ist. Dabei ist der Verschleißsensor 6 mit seinen Rastschenkeln 9 voran durch einen Ausschnitt 13 des Halteelementes 5 eingeschoben, wobei das Gehäuse 8 in einer Endstellung an den winkelförmig ausgebildeten Haltern 11 anliegt.

In der **Figur 5** ist eine geschnittene Rückansicht des Bremsbelages abgebildet, wobei zu erkennen ist, dass das Halteelement 5 mit einem Teilbereich eine Öffnung 7 der Belagträgerplatte 1 durchtritt, die auf ihrer der Belaghaltefeder 3 zugewandten Seite durch einen Steg 1' begrenzt ist.

Um zu verhindern, dass der Verschleißsensor 6 bei einer radialen Auslenkung der Belaghaltefeder 3 und damit des Halteelementes 5 gegen den Steg 1' gedrückt wird und diesen dabei beschädigt, sind an dem Halteeelement 5 in dem den Haltern 11 benachbarten Bereich zum Steg 1' hin ausgerichtete Laschen 12 vorgesehen, die bei entsprechender radialer Bewegung des Halteelementes 5 gegen den Steg 1' schlagen, wobei die Höhe der Laschen 12 größer ist als die Höhe der Rastschenkel 9 bzw. der benachbarten Teile des Verschleißsensors 6.

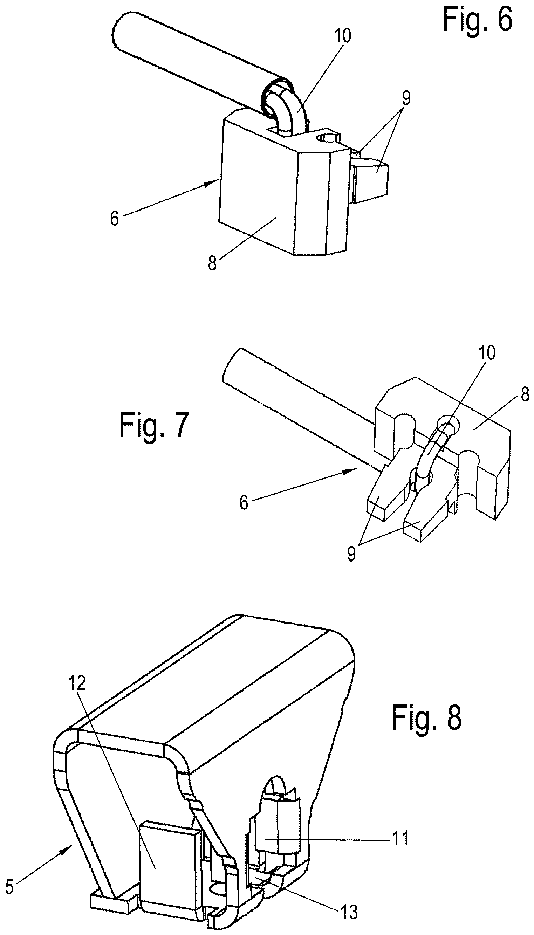

In der **Figur 6** ist ein Verschleißsensor 6 abgebildet, ebenso wie in der **Figur 7****,** wobei die Figur 6 die dem Reibbelag 2 zugewandte Vorderseite des Gehäuses 8 wiedergibt, während die Figur 7 die Rückseite mit den angeformten Rastschenkeln 9 zeigt.

In der **Figur 8** ist das Halteelement 5 als Haube als Einzelheit gezeigt, wie sie sich nach einer Montage an der Belagträgerplatte 1 darstellt.

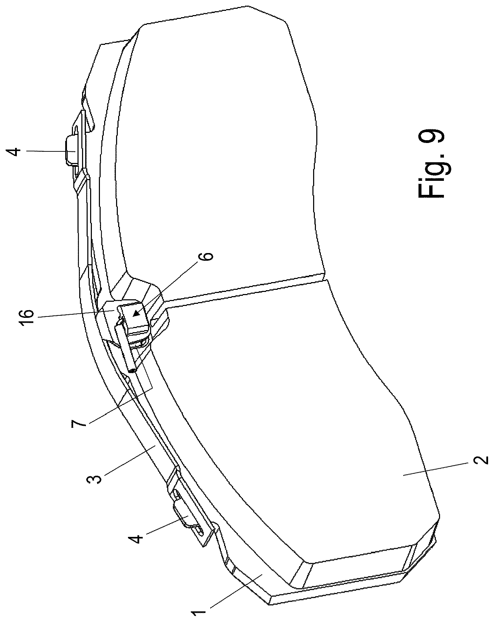

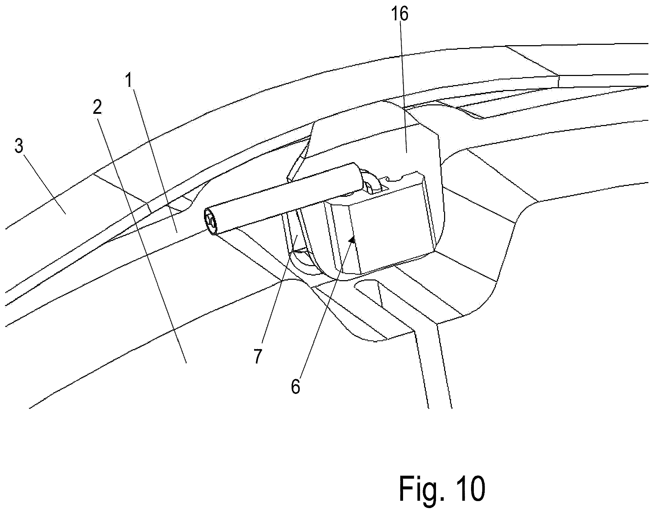

Die **Figuren 9** **und** **10** zeigt eine alternative Ausführungsvariante eines Bremsbelags gemäß der Erfindung. Bei dieser Ausführungsvariante ist der Verschleißsensor 6 formschlüssig an der Belaghaltefeder 3 gehalten.

Die Belaghaltefeder 3 ist auch bei dieser Ausführungsvariante an ihren voneinander beabstandeten Enden an den Nasen 4 der Belagträgerplatte 1 gehalten. Anstelle des Halteelementes 5, über das die Belaghaltefeder 3 radial beweglich an der Belagträgerplatte 1 befestigt ist, erstreckt sich von einem zentralen Bereich der Belaghaltefeder 3 eine vorzugsweise um 90° zu einer zugehörigen Bremsscheibe hin abgewinkelten Lasche 16, an der der Verschleißsensor 6 festgelegt ist, bevorzugt entsprechend der Befestigung am Halteelement 5, wie es weiter oben beschrieben wurde.

### Bezugszeichenliste

- 1: Belagträgerplatte
- 1': Steg
- 2: Reibbelag
- 3: Belaghaltefeder
- 4: Nase
- 5: Halteelement
- 6: Verschleißsensor
- 7: Öffnung
- 8: Gehäuse
- 9: Rastschenkel
- 10: Kontaktleiter
- 11: Halter
- 12: Lasche
- 13: Ausschnitt
- 14: Ausnehmung
- 15: Schlitz
- 16: Lasche

## Patentansprüche

1. Bremsbelag für eine Scheibenbremse, insbesondere für eine Scheibenbremse für ein Nutzfahrzeug, mit einer einen Reibbelag (2) tragenden Belagträgerplatte (1), mit der ein Element verbunden ist, das relativ zu der Belagträgerplatte (1) beweglich ist, und mit einem elektrischen Verschleißsensor (6),
**dadurch gekennzeichnet, dass**
der Verschleißsensor (6) an dem relativ zur Belagträgerplatte beweglichen Element so angeordnet ist, dass der Verschleißsensor (6) selbst relativ zur Belagträgerplatte (3) beweglich ist.

2. Bremsbelag nach Anspruch 1, **dadurch gekennzeichnet, dass** der Verschleißsensor (6) an einer Belaghaltefeder (3) angeordnet ist, welche das bewegliche Element bildet.

3. Bremsbelag nach Anspruch 2, **dadurch gekennzeichnet, dass** der Verschleißsensor (6) in einer Hubrichtung der Belaghaltefeder (3) gesehen relativ bewegbar zur Belagträgerplatte (1) an dieser gehalten ist.

4. Bremsbelag nach einem der Ansprüche 2 oder 3, **dadurch gekennzeichnet, dass** die Belaghaltefeder (3) an der Belagträgerplatte (1) ganz oder abschnittsweise mittels eines Halteelementes (5) gehalten ist, das relativ zu der Belagträgerplatte (1) beweglich ist, wobei der Verschleißsensor (6) in oder an dem Halteelement (5) befestigt ist.

5. Bremsbelag nach einem der Ansprüche 2 bis 4, **dadurch gekennzeichnet, dass** der Verschleißsensor (6) formschlüssig in oder an dem Halteelement (5) oder der Belaghaltefeder (3) gehalten ist.

6. Bremsbelag nach einem der Ansprüche 2 bis 5, **dadurch gekennzeichnet, dass**
die Belaghaltefeder (3) eine in Richtung des Reibbelages (2) und/der zu einer Bremsscheibe hin abgewinkelte Lasche aufweist, an der der Verschleißsensor (6) befestigt ist.

7. Bremsbelag nach Anspruch 6,
**dadurch gekennzeichnet, dass**
die abgewinkelte Lasche, an welcher der Verschleißsensor (6) befestigt ist, das Halteelement (5) bildet.

8. Bremsbelag nach einem der Ansprüche 4 bis 7,
**dadurch gekennzeichnet, dass**
das Halteelement (5) einen Ausschnitt (13) aufweist, durch den der Verschleißsensor (6) in das Halteelement (5) eingesteckt ist, wobei ein Gehäuse (8) des Verschleißsensors (6) an der dem Reibbelag zugeordneten Seite des Halteelementes (5) anliegt.

9. Bremsbelag nach einem der Ansprüche 4 bis 8,
**dadurch gekennzeichnet, dass**
der Verschleißsensor (6) mit dem Halteelement (5) oder der Belaghaltefeder (3) verrastet ist.

10. Bremsbelag nach einem der Ansprüche 4 bis 9,
**dadurch gekennzeichnet, dass**
der Verschleißsensor (6) Rastelemente aufweist, die mit Hinterschneidungen des Halteelementes (5) oder der Belaghaltefeder (3) korrespondieren.

11. Bremsbelag nach Anspruch 10,
**dadurch gekennzeichnet, dass**
die Rastelemente des Verschleißsensors (6) aus elastisch verformbaren Rastschenkeln (9) bestehen.

12. Bremsbelag nach Anspruch 11,
**dadurch gekennzeichnet, dass**
die Rastschenkel (9) Halter (11) des Halteelementes (5) hintergreifen.

13. Bremsbelag nach einem der Ansprüche 4 bis 12,
**dadurch gekennzeichnet, dass**
das Halteelement (5) mindestens eine Lasche (12) aufweist, mit der der Hub der Belaghaltefeder (3) begrenzbar ist.

14. Bremsbelag nach Anspruch 13,
**dadurch gekennzeichnet, dass**
die Lasche (12) im Überdeckungsbereich eines Steges (1') der Belagträgerplatte (1) positioniert ist, der eine Öffnung (7) der Belagträgerplatte (1) begrenzt.

15. Bremsbelag nach einem der Ansprüche 12 bis 14,
**dadurch gekennzeichnet, dass**
jedem Halter (11) benachbart eine Lasche (12) zugeordnet ist.

16. Bremsbelag nach einem der Ansprüche 8 bis 15,
**dadurch gekennzeichnet, dass**
der Ausschnitt (13), bezogen auf die Länge des Halteelementes (5) auf der dem Reibbelag (2) zugeordneten Seite mittig angeordnet ist.

17. Bremsbelag nach einem der Ansprüche 4 bis 16,
**dadurch gekennzeichnet, dass**
das Halteelement (5) in Gestalt einer Haube ausgebildet ist.

## Claims

1. Brake pad for a disc brake, in particular for a disc brake for a commercial vehicle, having a backing plate (1) which bears a friction lining (2) and to which an element which can move in relation to the backing plate (1) is connected, and having an electric wear sensor (6),
**characterised in that**
the wear sensor (6) is arranged on the element which can move in relation to the backing in such a way that the wear sensor (6) itself can move in relation to the backing plate (3).

2. Brake pad according to claim 1,
**characterised in that**
the wear sensor (6) is arranged on an anti-rattle spring (3) which forms the movable element.

3. Brake pad according to claim 2,
**characterised in that**
when viewed in a travel direction of the anti-rattle spring (3), the wear sensor (6) is secured to the backing plate (1) in such a way that it can be moved in relation thereto.

4. Brake pad according to claim 2 or 3,
**characterised in that**
the anti-rattle spring (3) is entirely or partially secured to the backing plate (1) by means of a securing element (5) which can move in relation to the backing plate (1), wherein the wear sensor (6) is attached in or to the securing element (5).

5. Brake pad according to any of claims 2 to 4,
**characterised in that**
the wear sensor (6) is positively secured in or on the securing element (5) or the anti-rattle spring (3).

6. Brake pad according to any of claims 2 to 5,
**characterised in that**
the anti-rattle spring (3) has a clip which is bent in the direction of the friction lining (2) and/or toward a brake disc to which the wear sensor (6) is attached.

7. Brake pad according to claim 6,
**characterised in that**
the bent clip to which the wear sensor (6) is attached forms the securing element (5).

8. Brake pad according to any of claims 4 to 7,
**characterised in that**
the securing element (5) has a cutout (13) through which the wear sensor (6) is plugged into the securing element (5), wherein a housing (8) of the wear sensor (6) adjoins the side of the securing element (5) which is assigned to the friction lining.

9. Brake pad according to any of claims 4 to 8,
**characterised in that**
the wear sensor (6) is latched to the securing element (5) or the anti-rattle spring (3).

10. Brake pad according to any of claims 4 to 9,
**characterised in that**
the wear sensor (6) has latching elements which correspond to undercuts of the securing element (5) or of the anti-rattle spring (3).

11. Brake pad according to claim 10,
**characterised in that**
the latching elements of the wear sensor (6) are composed of elastically deformable latching limbs (9).

12. Brake pad according to claim 11,
**characterised in that**
the latching limbs (9) engage behind holders (11) of the securing element (5).

13. Brake pad according to any of claims 4 to 12,
**characterised in that**
the securing element (5) has at least one clip (12) with which the travel of the anti-rattle spring (3) can be limited.

14. Brake pad according to claim 13,
**characterised in that**
the clip (12) is positioned in the overlapping region of a web (1') of the backing plate (1), which web (1') bounds an opening (7) of the backing plate (1).

15. Brake pad according to any of claims 12 to 14,
**characterised in that**
each securing device (11) is assigned an adjacent clip (12).

16. Brake pad according to any of claims 8 to 15,
**characterised in that**
the cutout (13) is arranged centrally with respect to the length of the securing element (5) on the side which is assigned to the friction lining (2).

17. Brake pad according to any of claims 4 to 16,
**characterised in that**
the securing element (5) is embodied in the form of a cap.

## Revendications

1. Garniture d'un frein à disque, notamment d'un frein à disque de véhicule utilitaire, comprenant une plaque (1) de support de garniture, qui porte une garniture (2) de friction et à laquelle est relié un élément mobile par rapport à la plaque (1) de support de garniture, et comprenant un capteur (6) électrique d'usure,
**caractérisée en ce que**
le capteur (6) d'usure est monté sur l'élément mobile par rapport à la plaque de support de garniture, de manière à ce que le capteur (6) d'usure soi-même soit mobile par rapport à la plaque (3) de support de garniture.

2. Garniture de frein suivant la revendication 1, **caractérisée en ce que** le capteur (6) d'usure est monté sur un ressort (3) de maintien de garniture, qui forme l'élément mobile.

3. Garniture de frein suivant la revendication 2, **caractérisée en ce que** le capteur (6) d'usure est, considéré dans une direction de course du ressort (3) de maintien de garniture, monté mobile par rapport à la plaque (1) de support de garniture sur celle-ci.

4. Garniture de frein suivant l'une des revendications 2 ou 3, **caractérisée en ce que** le ressort (3) de maintien de garniture est maintenu sur la plaque (1) de support de garniture, en tout ou partie, au moyen d'un élément (5) de maintien mobile par rapport à la plaque (1) de support de garniture, le capteur (6) d'usure étant fixé dans ou sur l'élément (5) de maintien.

5. Garniture de frein suivant l'une des revendications 2 à 4, **caractérisée en ce que** le capteur (6) d'usure est maintenu à complémentarité de forme dans ou sur l'élément (5) de maintien ou le ressort (3) de maintien de garniture.

6. Garniture de frein suivant l'une des revendications 2 à 5, **caractérisée en ce que** le ressort (3) de maintien de garniture a une languette, coudée en direction de la garniture (2) de friction et/ou par rapport à un disque de frein, sur laquelle est fixé le capteur (6) d'usure.

7. Garniture de frein suivant la revendication 6, **caractérisée en ce que** la languette coudée, sur laquelle est fixé le capteur (6) d'usure, forme l'élément (5) de maintien.

8. Garniture de frein suivant l'une des revendications 4 à 7, **caractérisée en ce que** l'élément (5) de maintien a une découpe (13), par laquelle le capteur (6) d'usure est enfiché dans, l'élément (5) de maintien, un boîtier (8) du capteur (6) d'usure s'appliquant au côté, associé à la garniture de friction, de l'élément (5) de maintien.

9. Garniture de frein suivant l'une des revendications 4 à 8, **caractérisée en ce que** le capteur (6) d'usure est encliqueté avec l'élément (5) de maintien ou avec le ressort (3) de maintien de garniture.

10. Garniture de frein suivant l'une des revendications 4 à 9, **caractérisée en ce que** le capteur (6) d'usure a des éléments d'encliquetage, qui correspondent à des contredépouilles de l'élément (5) de maintien ou du ressort (3) de maintien de garniture.

11. Garniture de frein suivant la revendication 10, **caractérisée en ce que** les éléments d'encliquetage du capteur (6) d'usure sont constitués de branches (9) d'encliquetage déformables élastiquement.

12. Garniture de frein suivant la revendication 11, **caractérisée en ce que** les branches (9) d'encliquetage s'accrochent derrière des fixations (11) de l'élément (5) de maintien.

13. Garniture de frein suivant l'une des revendications 4 à 12, **caractérisée en ce que** l'élément (5) de maintien a au moins une languette (12), par laquelle la course du ressort (3) de maintien de garniture peut être limitée.

14. Garniture de frein suivant la revendication 13, **caractérisée en ce que** la languette (12) est placée dans la région de recouvrement d'une entretoise (1') de la plaque (1) de support de garniture, qui délimite une ouverture (7) de la plaque (1) de support de garniture.

15. Garniture de frein suivant l'une des revendications 12 à 14, **caractérisée en ce qu'**une languette (12) est associée au voisinage de chaque fixation (11).

16. Garniture de frein suivant l'une des revendications 8 à 15, **caractérisée en ce que** la découpe (13) est rapportée à la longueur de l'élément (5) de maintien, disposée au milieu du côté associé à la garniture (2) de friction.

17. Garniture de frein suivant l'une des revendications 4 à 16, **caractérisée en ce que** l'élément (5) de maintien est constitué en ayant la forme d'une hotte.
